# EUROPEAN PATENT APPLICATION

(11) **EP 4 712 247 A1**
(43) Date of publication of application: **18.03.2026**
(21) Application number: 23938879.6
(22) Date of filing: 31.05.2023
(51) Int. Cl.: H01M 50/40

(54) **SEPARATOR AND PREPARATION METHOD THEREFOR, SECONDARY BATTERY AND ELECTRIC DEVICE**

(71) Applicant: Contemporary Amperex Technology Co., Limited, Ningde, Fujian 352100 (CN)
(72) Inventor: GUO, Yao, Ningde, Fujian 352100 (CN); ZOU, Hailin, Ningde, Fujian 352100 (CN); LUO, Xilin, Ningde, Fujian 352100 (CN); CHEN, Peipei, Ningde, Fujian 352100 (CN)
(74) Representative: Lorenz Seidler Gossel Part. mbB
(86) International application number: PCT/CN2023/097551
(87) International publication number: WO 2024/243888

(57) **Abstract**

Embodiments of the present application provide a separator, a preparation method thereof, a secondary battery, and an electric apparatus. The separator includes a first base film, a coating, and a second base film, where the coating is disposed between the first base film and the second base film, the coating includes an ion-trapping agent, and a reduction potential of the ion-trapping agent relative to lithium metal is 0 V to 2 V. A secondary battery containing the separator exhibits improved cycling performance.

## Description

### TECHNICAL FIELD

The present application relates to the field of battery technology, particularly to a separator, a preparation method thereof, a secondary battery, and an electric apparatus.

### BACKGROUND

In recent years, the application scope of secondary batteries has become increasingly broad, being widely applied in energy storage power systems such as hydroelectric, thermal, wind, and solar power stations, as well as in electric tools, electric bicycles, electric motorcycles, electric vehicles, military equipment, aerospace, and various other fields.

Due to the significant advancements in secondary batteries, higher requirements have been imposed on their electrochemical performance. Therefore, providing a secondary battery with excellent performance is a technical problem urgently needing resolution.

### SUMMARY

The present application is made in view of the above technical problems, with an objective to provide a separator, a preparation method thereof, a secondary battery, and an electric apparatus, where a secondary battery containing the separator exhibits improved cycling performance.

According to a first aspect, a separator is provided, including a first base film, a coating, and a second base film, where the coating is disposed between the first base film and the second base film, the coating includes an ion-trapping agent, and a reduction potential of the ion-trapping agent relative to lithium metal is 0 V to 2 V.

In embodiments of the present application, the separator includes an ion-trapping agent, and a reduction potential of the ion-trapping agent relative to lithium metal is 0 V to 2 V. A positive electrode material is a critical component of a secondary battery, directly affecting the performance of the secondary battery, and positive electrode materials containing transition metals inevitably experience dissolution of transition metal ions in an electrochemical environment. The dissolved transition metal ions disrupt structural stability of the original positive electrode material, thereby affecting lifespan of the secondary battery. The dissolved transition metal ions migrate and deposit onto a surface of a negative electrode material, catalyzing decomposition and regeneration of an electrolyte and a negative electrode interface film, continuously consuming reversible active metal, and ultimately leading to performance degradation of the secondary battery. In the technical solution of embodiments of the present application, a reduction potential of the ion-trapping agent in the separator relative to lithium metal is 0 V to 2 V, while a reduction potential of transition metal ions relative to lithium metal is generally above 2 V. Therefore, the ion-trapping agent is capable of reducing the dissolved transition metal ions in the secondary battery into low-valence ions that are less prone to dissolution or into elemental metal, mitigating the catalytic decomposition of the electrolyte and the negative electrode interface film by transition metal ions, thereby improving cycling performance of the secondary battery. Additionally, since a reduction potential of H⁺ relative to lithium metal is higher than that of transition metal ions relative to lithium metal, the ion-trapping agent is also capable of reducing H⁺ in a battery cell, thereby serving to remove acidic substances (such as HF, organic acid RH⁺, or H radicals) from the electrolyte, further enhancing performance of the secondary battery. The coating is disposed between the first base film and the second base film, such that when a positive electrode plate, the separator, and a negative electrode plate are sequentially stacked and wound into an electrode assembly, a possibility of direct contact between the ion-trapping agent and positive and negative electrode active materials is reduced, thereby reducing a risk of the ion-trapping agent losing redox activity and a risk of the ion-trapping agent affecting performance of the positive and negative electrode active materials. Meanwhile, the separator includes both the first base film and the second base film, further enhancing mechanical strength of the separator.

In a possible implementation, the ion-trapping agent includes at least one of an active metal and a compound of an alkali metal. Optionally, the active metal includes at least one of Li, Na, K, Rb, Cs, Fr, Mg, Ca, Sr, Ba, Al, Ti, or V; and optionally, the active metal includes at least one of Li, Na, Mg, Al, Ti, or V. Optionally, the compound of the alkali metal includes at least one of A¹ₓB, A²_{y}Ti₅O₁₂, or a compound represented by formula (I), formula (II), or formula (III): 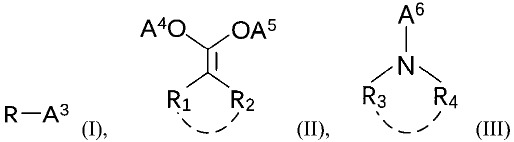 where A¹, A², A³, A⁴, A⁵, and A⁶ each independently include at least one of Li, Na, or K; B includes C, Si, or Sn; x ≥ 0.05; y > 4; and R, R₁, R₂, R₃, and R₄ each independently include at least one of a hydrogen atom, an alkyl group having 1 to 20 carbon atoms, an alkyl group having 1 to 20 carbon atoms substituted with a sulfonic acid group or a sulfonyl group, an alkenyl group having 2 to 20 carbon atoms, an alkenyl group having 2 to 20 carbon atoms substituted with a sulfonic acid group or a sulfonyl group, an aryl group having 6 to 26 carbon atoms, an aryl group having 6 to 26 carbon atoms substituted with a sulfonic acid group or a sulfonyl group, a carboxyl group having 1 to 20 carbon atoms, a carboxyl group having 1 to 20 carbon atoms substituted with a sulfonic acid group or a sulfonyl group, a carbonyl group having 1 to 20 carbon atoms, a carbonyl group having 1 to 20 carbon atoms substituted with a sulfonic acid group or a sulfonyl group, an aryloxy group having 6 to 26 carbon atoms, or an aryloxy group having 6 to 26 carbon atoms substituted with a sulfonic acid group or a sulfonyl group.

In a possible implementation, A¹ₓB includes at least one of Li_{1/6}C, Na_{1/6}C, K_{1/8}C, Li_{4.4}Si, or Li_{4.4}Sn.

In a possible implementation, 5 ≤ y ≤ 7; and optionally, A²_{y}Ti₅O₁₂ includes at least one of Li₇Ti₅O₁₂ or Na₇Ti₅O₁₂.

In a possible implementation, the compound represented by formula (I) includes at least one of n-butyllithium, naphthyllithium, or biphenyllithium.

In a possible implementation, the compound represented by formula (II) includes at least one of

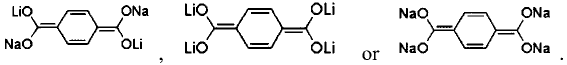

In a possible implementation, the compound represented by formula (III) includes at least one of

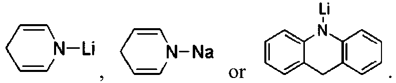

In a possible implementation, a mass of the ion-trapping agent per unit area of the separator is 0.12 g/m² to 24 g/m²; and optionally, a mass of the ion-trapping agent per unit area of the separator is 0.48 g/m² to 12 g/m².

When a mass of the ion-trapping agent per unit area of the separator is too small, a content of the ion-trapping agent in the separator is insufficient, and the ion-trapping agent fails to effectively perform a chemical reaction to reduce transition metal ions. When a mass of the ion-trapping agent per unit area of the separator is too large, more pores of the base film are blocked, significantly reducing migration channels for active metal ions in the separator, thereby significantly increasing internal resistance of the secondary battery. This deteriorates performance of the secondary battery, such as affecting cycling performance of the secondary battery, and increasing production costs. Therefore, setting a mass of the ion-trapping agent per unit area of the separator within an appropriate range is beneficial to enhancing performance of the secondary battery.

In a possible implementation, a mass proportion of the ion-trapping agent in the coating is 50% to 99%; and optionally, a mass proportion of the ion-trapping agent in the coating is 80% to 98%.

When a mass proportion of the ion-trapping agent in the coating is within the given range, the ion-trapping agent is capable of effectively reducing transition metal ions, thereby further improving cycling performance of the battery.

In a possible implementation, the first base film and the second base film each independently include at least one of a polyolefin and derivatives thereof, a halogenated polyolefin and derivatives thereof, a polyether and derivatives thereof, a polyether ether ketone and derivatives thereof, a polyester and derivatives thereof, a polyimide and derivatives thereof, or a polyvinyl alcohol and derivatives thereof. Optionally, the halogenated polyolefin and derivatives thereof include at least one of polytetrafluoroethylene and derivatives thereof, polyvinyl fluoride and derivatives thereof, or polyvinylidene fluoride and derivatives thereof. Optionally, the polyester and derivatives thereof include at least one of polyethylene terephthalate and derivatives thereof or polybutylene terephthalate and derivatives thereof.

In a possible implementation, the coating further includes a binder. Optionally, the binder includes at least one of polyacrylate, polyacrylic acid, polytetrafluoroethylene, polyvinylidene fluoride, a vinylidene fluoride-trichloroethylene copolymer, polyvinylpyrrolidone, polyvinyl acetate, an ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, or cyanoethyl branched starch.

The ion-trapping agent in the coating is capable of being bonded to the first base film and the second base film through the binder, ensuring good adhesion between the ion-trapping agent and the first base film and the second base film, thereby enhancing overall structural strength of the separator.

In a possible implementation, the coating further includes a filler. Optionally, the filler includes at least one of inorganic particles, organic particles, or an organic-metal framework material. Optionally, the inorganic particles include at least one of inorganic particles having a dielectric constant of 5 or more or inorganic particles having ion conductivity but not storing ions. Optionally, the organic particles include at least one of polycarbonate, polythiophene, polypyridine, polystyrene, polyacrylic wax, polyethylene, polypropylene, cellulose, a cellulose modifier, melamine resin, phenolic resin, polyester, silicone resin, polyimide, polyamide-imide, polyaramid, polyphenylene sulfide, polysulfone, polyethersulfone, polyether ether ketone, polyaryl ether ketone, or a copolymer of butyl acrylate and ethyl methacrylate. Optionally, the organic-metal framework material includes at least one of a structure constructed with nitrogen-containing heterocyclic ligands, a structure constructed with organic carboxylic acid ligands, or a structure constructed with mixed nitrogen-oxygen ligands.

According to a second aspect, a preparation method of a separator is provided, including: providing a first base film and a second base film; providing a coating slurry, where the coating slurry includes an ion-trapping agent, and a reduction potential of the ion-trapping agent relative to lithium metal is 0 V to 2 V; applying the coating slurry onto the first base film and/or the second base film; and stacking the first base film and the second base film to obtain a separator.

According to a third aspect, a secondary battery is provided, including the separator according to the first aspect and any possible implementation thereof.

According to a fourth aspect, an electric apparatus is provided, including the secondary battery according to the third aspect.

Embodiments of the present application provide a separator, including a first base film, a coating, and a second base film, where the coating is disposed between the first base film and the second base film, the coating includes an ion-trapping agent, and a reduction potential of the ion-trapping agent relative to lithium metal is 0 V to 2 V. A positive electrode material is a critical component of a secondary battery, directly affecting performance of the secondary battery, and positive electrode materials containing transition metals inevitably experience dissolution of transition metal ions in an electrochemical environment. The dissolved transition metal ions disrupt structural stability of the original positive electrode material, thereby affecting lifespan of the secondary battery. The dissolved transition metal ions migrate and deposit onto a surface of a negative electrode material, catalyzing decomposition and regeneration of an electrolyte and a negative electrode interface film, continuously consuming reversible active metal, and ultimately leading to performance degradation of the secondary battery. In the technical solution of embodiments of the present application, a reduction potential of the ion-trapping agent in the separator relative to lithium metal is 0 V to 2 V, while a reduction potential of transition metal ions relative to lithium metal is generally above 2 V. Therefore, the ion-trapping agent is capable of reducing the dissolved transition metal ions in the secondary battery into low-valence ions that are less prone to dissolution or into elemental metal, mitigating the catalytic decomposition of the electrolyte and the negative electrode interface film by transition metal ions, thereby improving cycling performance of the secondary battery. Additionally, since a reduction potential of H⁺ relative to lithium metal is higher than that of transition metal ions relative to lithium metal, the ion-trapping agent is also capable of reducing H⁺ in a battery cell, thereby serving to remove acidic substances (such as HF, organic acid RH⁺, or H radicals) from the electrolyte, further enhancing performance of the secondary battery. The coating is disposed between the first base film and the second base film, such that when a positive electrode plate, the separator, and a negative electrode plate are sequentially stacked and wound into an electrode assembly, a possibility of direct contact between the ion-trapping agent and positive and negative electrode active materials is reduced, thereby reducing a risk of the ion-trapping agent losing redox activity and a risk of the ion-trapping agent affecting performance of the positive and negative electrode active materials. Meanwhile, the separator includes both the first base film and the second base film, further enhancing mechanical strength of the separator.

### BRIEF DESCRIPTION OF DRAWINGS

To more clearly illustrate technical solutions of embodiments of the present application, drawings required for use in embodiments of the present application are briefly introduced below. It is apparent that the drawings described below are merely some embodiments of the present application, and those of ordinary skill in the art are capable of obtaining other drawings based on these drawings without creative efforts.
FIG. 1 is a schematic diagram of a separator disclosed in an embodiment of the present application;
FIG. 2 is a schematic diagram of a preparation method of a separator disclosed in an embodiment of the present application;
FIG. 3 is a schematic diagram of a battery cell disclosed in an embodiment of the present application;
FIG. 4 is an exploded schematic structural diagram of a battery cell disclosed in an embodiment of the present application;
FIG. 5 is an exploded schematic structural diagram of a battery disclosed in an embodiment of the present application; and
FIG. 6 is a schematic diagram of an electric apparatus disclosed in an embodiment of the present application.

In the drawings, the drawings are not drawn to actual scale.

### DESCRIPTION OF EMBODIMENTS

Hereinafter, embodiments specifically disclosing the separator, secondary battery, and electric apparatus of the present application are described in detail with appropriate reference to the drawings. However, unnecessary detailed descriptions may be omitted. For example, detailed descriptions of well-known matters or repetitive descriptions of substantially identical structures may be omitted. This is to avoid unnecessarily lengthy descriptions and facilitate understanding by those skilled in the art. Additionally, the drawings and the following descriptions are provided for those skilled in the art to fully understand the present application and are not intended to limit the subject matter recited in the claims.

In the description of the present application, it is noted that, unless otherwise specified, "plurality" means two or more; terms such as "upper," "lower," "left," "right," "inner," and "outer" indicating orientation or positional relationships are used merely for convenience in describing the present application and simplifying the description, and do not indicate or imply that the referenced devices or elements must have a specific orientation, be constructed, or operate in a specific orientation, and thus should not be construed as limiting the present application. Additionally, terms such as "first," "second," or "third," are used for descriptive purposes only and should not be understood as indicating or implying relative importance.

"Ranges" disclosed in the present application are defined in the form of lower and upper limits, where a given range is defined by selecting a lower limit and an upper limit, and the selected lower and upper limits define boundaries of a particular range. Ranges defined in this manner may include or exclude endpoints and may be arbitrarily combined, meaning any lower limit may be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, a numerical range "a-b" represents an abbreviated representation of any combination of real numbers between a and b, where a and b are both real numbers. For example, a numerical range "0-5" indicates that all real numbers between "0-5" have been listed herein, and "0-5" is merely an abbreviated representation of these numerical combinations. Additionally, a parameter expressed as an integer greater than or equal to 2 is equivalent to disclosing that the parameter is, for example, an integer among 2, 3, 4, 5, 6, 7, 8, 9, 10, 11, 12, or the like.

Unless otherwise specified, "include" and "comprise" mentioned in the present application indicate an open-ended inclusion. For example, "include" and "comprise" may indicate inclusion or containment of other components not listed.

Unless otherwise specified, in the present application, the term "and/or" is inclusive. For example, the phrase "A and/or B" means "A, B, or both A and B." More specifically, any of the following conditions satisfies the condition "A and/or B": A is true (or present) and B is false (or absent); A is false (or absent) and B is true (or present); or both A and B are true (or present).

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, the following terms have the following meanings. Any undefined terms have their technically well-known meanings.

"Alkyl group" refers to a monovalent saturated hydrocarbon group having one or more carbon atoms, optionally having 1 to 20 carbon atoms. For example, alkyl includes a straight-chain hydrocarbon group and a branched-chain hydrocarbon group, such as methyl (CH₃-), ethyl (CH₃CH₂-), n-propyl (CH₃CH₂CH₂-), isopropyl ((CH₃)₂CH-), n-butyl (CH₃CH₂CH₂CH₂-), isobutyl ((CH₃)₂CHCH₂-), sec-butyl ((CH₃)(CH₃CH₂)CH-), tert-butyl ((CH₃)₃C-), or n-pentyl (CH₃CH₂CH₂CH₂CH₂-), neopentyl ((CH₃)₃CCH₂-).

"Alkenyl group" refers to a straight-chain or branched-chain hydrocarbon group having one or more carbon atoms and at least one double bond unsaturation site, optionally having 2 to 20 carbon atoms, such as vinyl (CH₂=CH-), propenyl (CH₃CH=CH-), allyl (CH₂=CH-CH₂-), or n-butenyl (-CH₃CH₂CH=CH-).

"Aryl group" refers to an aromatic compound having a single ring or a plurality of fused rings, optionally having 6 to 26 carbon atoms such as aryl includes phenyl, naphthyl, or indenyl. Aryl also includes a single ring fused with aryl, such as tetrahydronaphthyl or 2,3-dihydroindenyl.

"Carboxyl group" refers to a group having one or more carbon atoms and a -CO₂H functional group, optionally having 1 to 20 carbon atoms.

"Carbonyl group" refers to a group having one or more carbon atoms and a -CO- functional group, optionally having 1 to 20 carbon atoms.

"Aryloxy group" refers to a group formed by at least one carbon atom on an aromatic ring of an aryl group connected to an oxygen atom, optionally having 6 to 26 carbon atoms.

"Sulfonic acid group" refers to -SO₃H.

"Sulfonyl group" refers to R-S(=O)₂-, where R includes hydrogen atom, alkyl group, alkenyl group, alkynyl group, aryl group, cycloalkyl group, cycloalkenyl group, heteroaryl group, heterocyclyl group, or the like.

A secondary battery refers to a battery that, after discharge, is capable of being recharged to activate active materials for continued use. Typically, a secondary battery includes a positive electrode plate, a negative electrode plate, a separator, and an electrolyte. During charging and discharging of the battery, active ions intercalate and deintercalate back and forth between the positive electrode plate and the negative electrode plate. The separator is disposed between the positive electrode plate and the negative electrode plate for separation. The electrolyte conducts ions between the positive electrode plate and the negative electrode plate.

In recent years, the application scope of secondary batteries has become increasingly broad, being widely applied in energy storage power systems such as hydroelectric, thermal, wind, and solar power stations, as well as in electric tools, electric bicycles, electric motorcycles, electric vehicles, military equipment, aerospace, and various other fields.

Due to the significant advancements in secondary batteries, higher requirements have been imposed on their energy density, cycling performance, safety performance, and service life. Therefore, how to provide a secondary battery with good performance is a technical problem urgently needing resolution.

A positive electrode material is one of the key materials determining performance of a secondary battery, mainly including metal oxides, polyanionic salts, or the like, among which layered structure metal oxides and spinel-type metal oxides containing transition metals are widely used as positive electrode materials. The above positive electrode materials containing transition metals have advantages such as high energy density and good cycling performance, which are beneficial to enhancing performance of a secondary battery. However, positive electrode materials containing transition metals inevitably experience dissolution of transition metal ions in an electrochemical environment. The dissolved transition metal ions disrupt structural stability of the original positive electrode material, thereby affecting lifespan of the secondary battery. The dissolved transition metal ions migrate and deposit onto a surface of a negative electrode material, catalyzing decomposition and regeneration of an electrolyte and a negative electrode interface film, continuously consuming reversible active metal, and ultimately leading to performance degradation of the secondary battery.

In view of this, embodiments of the present application provide a separator including a first base film, a coating, and a second base film, where the coating is disposed between the first base film and the second base film, the coating includes an ion-trapping agent, and a reduction potential of the ion-trapping agent relative to lithium metal is 0 V to 2 V, while a reduction potential of transition metal ions relative to lithium metal is generally above 2 V. Therefore, the ion-trapping agent is capable of reducing the dissolved transition metal ions in the secondary battery into low-valence ions that are less prone to dissolution or into elemental metal, mitigating the catalytic decomposition of the electrolyte and the negative electrode interface film by transition metal ions, thereby improving cycling performance of the secondary battery. Additionally, since a reduction potential of H⁺ relative to lithium metal is higher than that of transition metal ions relative to lithium metal, the ion-trapping agent is also capable of reducing H⁺ in a battery cell, thereby serving to remove acidic substances (such as HF, organic acid RH⁺, or H radicals) from the electrolyte, further enhancing performance of the secondary battery. The coating is disposed between the first base film and the second base film, such that when a positive electrode plate, the separator, and a negative electrode plate are sequentially stacked and wound into an electrode assembly, a possibility of direct contact between the ion-trapping agent and positive and negative electrode active materials is reduced, thereby reducing a risk of the ion-trapping agent losing redox activity and a risk of the ion-trapping agent affecting performance of the positive and negative electrode active materials. Meanwhile, the separator includes both the first base film and the second base film, further enhancing mechanical strength of the separator.

### [Separator]

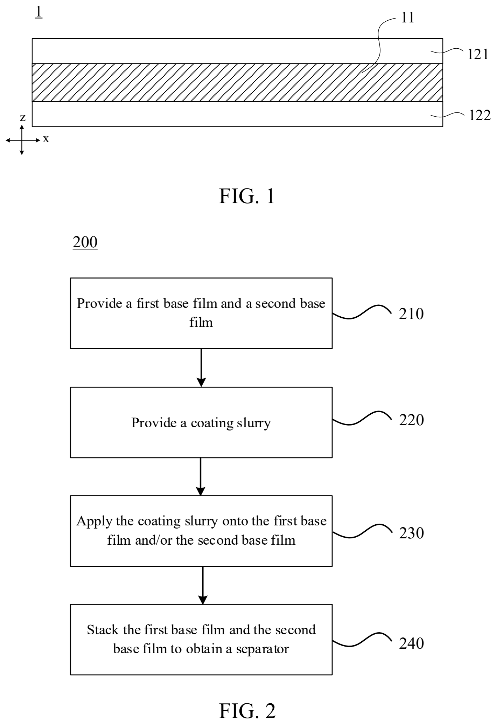

FIG. 1 is a schematic diagram of a separator 1 according to an embodiment of the present application. As shown in FIG. 1, the separator 1 includes a first base film 121, a second base film 122, and a coating 11, where the coating 11 is disposed between the first base film 121 and the second base film 122. Along a thickness direction of the separator 1 (for example, the z-direction in FIG. 1), the first base film 121, the coating 11, and the second base film 122 are sequentially arranged. The coating 11 includes an ion-trapping agent, and a reduction potential of the ion-trapping agent relative to lithium metal is 0 V to 2 V.

The ion-trapping agent referred to herein is a class of substances capable of consuming free transition metal ions in a battery cell. A reduction potential of the ion-trapping agent relative to lithium metal is 0 V to 2 V, while a reduction potential of transition metal ions relative to lithium metal is generally above 2 V. Therefore, the ion-trapping agent has stronger reducibility than transition metal ions, enabling the ion-trapping agent to reduce free transition metal ions into low-valence ions that are less soluble in the electrolyte or into elemental metal.

A positive electrode material is a critical component of a secondary battery, directly affecting performance of the secondary battery, and positive electrode materials containing transition metals inevitably experience dissolution of transition metal ions in an electrochemical environment. The dissolved transition metal ions disrupt structural stability of the original positive electrode material, thereby affecting lifespan of the secondary battery. The dissolved transition metal ions migrate and deposit onto a surface of a negative electrode material, catalyzing decomposition and regeneration of an electrolyte and a negative electrode interface film, continuously consuming reversible active metal, and ultimately leading to performance degradation of the secondary battery.

For example, the positive electrode material may include a phosphate material with an olivine structure, a material with a spinel structure, or a transition metal oxide with a layered structure, specifically, such as lithium iron phosphate (LiFePO₄), lithium manganese iron phosphate (LiMnFePO₄), lithium manganate (LiMn₂O₄), or ternary materials. Iron ions, nickel ions, manganese ions, and the like in the above positive electrode materials all exhibit dissolution from the positive electrode material.

The separator provided in embodiments of the present application includes an ion-trapping agent, and a reduction potential of the ion-trapping agent relative to lithium metal is 0 V to 2 V, while a reduction potential of transition metal ions relative to lithium metal is generally above 2 V. Therefore, the ion-trapping agent is capable of reducing the dissolved transition metal ions in the secondary battery into low-valence ions that are less prone to dissolution or into elemental metal, mitigating the catalytic decomposition of the electrolyte and the negative electrode interface film by transition metal ions, thereby improving cycling performance of the secondary battery. Additionally, since a reduction potential of H⁺ relative to lithium metal is higher than that of transition metal ions relative to lithium metal, the ion-trapping agent is also capable of reducing H⁺ in a battery cell, thereby serving to remove acidic substances (such as HF, organic acid RH⁺, or H radicals) from the electrolyte, further enhancing performance of the secondary battery. The coating is disposed between the first base film and the second base film, such that when the positive electrode plate, the separator, and the negative electrode plate are sequentially stacked and wound into an electrode assembly, a possibility of direct contact between the ion-trapping agent and positive and negative electrode active materials is reduced, thereby reducing a risk of the ion-trapping agent losing redox activity and a risk of the ion-trapping agent affecting performance of the positive and negative electrode active materials. Meanwhile, the separator includes both the first base film and the second base film, further enhancing mechanical strength of the separator.

It should be understood that, in embodiments of the present application, different types of ion-trapping agents may be selected based on different types of free transition metal ions dissolved in the secondary battery.

Optionally, in some embodiments, the ion-trapping agent includes at least one of an active metal or a compound of an alkali metal.

Specifically, the active metal may include at least one of Li, Na, K, Rb, Cs, Fr, Mg, Ca, Sr, Ba, Al, Ti, or V; and optionally, the active metal includes at least one of Li, Na, Mg, Al, Ti, or V.

Optionally, the compound of the alkali metal includes at least one of A¹ₓB, A²_{y}Ti₅O₁₂, or a compound represented by formula (I), formula (II), or formula (III): 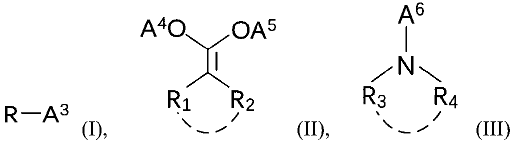 where A¹, A², A³, A⁴, A⁵, and A⁶ each independently include at least one of Li, Na, or K; B includes C, Si, or Sn; x ≥ 0.05; y > 4; and R, R₁, R₂, R₃, and R₄ each independently include at least one of a hydrogen atom, an alkyl group having 1 to 20 carbon atoms, an alkyl group having 1 to 20 carbon atoms substituted with a sulfonic acid group or a sulfonyl group, an alkenyl group having 2 to 20 carbon atoms, an alkenyl group having 2 to 20 carbon atoms substituted with a sulfonic acid group or a sulfonyl group, an aryl group having 6 to 26 carbon atoms, an aryl group having 6 to 26 carbon atoms substituted with a sulfonic acid group or a sulfonyl group, a carboxyl group having 1 to 20 carbon atoms, a carboxyl group having 1 to 20 carbon atoms substituted with a sulfonic acid group or a sulfonyl group, a carbonyl group having 1 to 20 carbon atoms, a carbonyl group having 1 to 20 carbon atoms substituted with a sulfonic acid group or a sulfonyl group, an aryloxy group having 6 to 26 carbon atoms, or an aryloxy group having 6 to 26 carbon atoms substituted with a sulfonic acid group or a sulfonyl group.

In embodiments of the present application, a dashed line in formula (II) indicates that R₁ and R₂ may or may not form a ring; and a dashed line in formula (III) indicates that R₃ and R₄ may or may not form a ring.

Optionally, A¹ₓB includes at least one of LiC₆, NaC₆, KC₈, Li_{4.4}Si, Li_{4.4}Sn, or Li₂₂Si₅.

In embodiments of the present application, a value of x in A¹ₓB depends on a specific substance selected for B. For example, when B is carbon (C), an upper limit of x is 1/6. For another example, when B is silicon (Si) or tin (Sn), an upper limit of x is 4.4.

Optionally, 5 ≤ y ≤ 7, and A²_{y}Ti₅O₁₂ includes at least one of Li₇Ti₅O₁₂ or Na₇Ti₅O₁₂.

Optionally, the compound represented by formula (I) includes at least one of n-butyllithium, naphthyllithium, or biphenyllithium.

Optionally, the compound represented by formula (II) includes at least one of

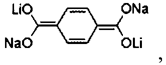

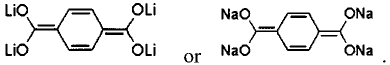

Optionally, the compound represented by formula (III) includes at least one of

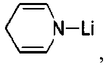

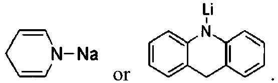

Optionally, in some embodiments, a mass of the ion-trapping agent per unit area of the separator 1 is 0.12 g/m² to 24 g/m²; and optionally, a mass of the ion-trapping agent per unit area of the separator 1 is 0.48 g/m² to 12 g/m².

Specifically, a mass of the ion-trapping agent per unit area of the separator 1 may be 0.12 g/m², 0.48 g/m², 1 g/m², 4 g/m², 8 g/m², 12 g/m², 16 g/m², 20 g/m², 24 g/m², or any value between any two of these values.

When a mass of the ion-trapping agent per unit area of the separator 1 is too small, a content of the ion-trapping agent in the separator 1 is insufficient, and the ion-trapping agent fails to effectively perform a chemical reaction to reduce transition metal ions. When a mass of the ion-trapping agent per unit area of the separator 1 is too large, more pores of the base film 12 are blocked, significantly reducing migration channels for active metal ions in the separator 1, thereby significantly increasing internal resistance of the secondary battery. This deteriorates performance of the secondary battery, such as affecting cycling performance of the secondary battery, and increasing production costs. Therefore, setting a mass of the ion-trapping agent per unit area of the separator 1 within an appropriate range is beneficial to enhancing performance of the secondary battery.

Optionally, in some embodiments, a mass proportion of the ion-trapping agent in the coating 11 is 50% to 99%; and optionally, a mass proportion of the ion-trapping agent in the coating 11 is 80% to 98%.

Specifically, a mass proportion of the ion-trapping agent in the coating 11 may be 50%, 60%, 70%, 80%, 90%, 95%, 98%, 99%, or any value between any two of these values.

When a mass proportion of the ion-trapping agent in the coating 11 is within the given range, the ion-trapping agent is capable of effectively reducing transition metal ions, thereby further improving cycling performance of the battery.

Optionally, in some embodiments, the first base film and the second base film each independently include at least one of a polyolefin and derivatives thereof, a halogenated polyolefin and derivatives thereof, a polyether and derivatives thereof, a polyether ether ketone and derivatives thereof, a polyester and derivatives thereof, a polyimide and derivatives thereof, or a polyvinyl alcohol and derivatives thereof. Optionally, the halogenated polyolefin and derivatives thereof include at least one of polytetrafluoroethylene and derivatives thereof, polyvinyl fluoride and derivatives thereof, or polyvinylidene fluoride and derivatives thereof. Optionally, the polyester and derivatives thereof include at least one of polyethylene terephthalate and derivatives thereof or polybutylene terephthalate and derivatives thereof.

Optionally, in some embodiments, the coating further includes a binder. Optionally, the binder includes at least one of polyacrylate, polyacrylic acid, polytetrafluoroethylene, polyvinylidene fluoride, a vinylidene fluoride-trichloroethylene copolymer, polyvinylpyrrolidone, polyvinyl acetate, an ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, or cyanoethyl branched starch.

The ion-trapping agent in the coating is capable of being bonded to the first base film and the second base film through the binder, ensuring good adhesion between the ion-trapping agent and the first base film and the second base film, thereby enhancing overall structural strength of the separator.

Optionally, in some embodiments, the coating further includes a filler. Optionally, the filler includes at least one of inorganic particles, organic particles, or an organic-metal framework material.

Optionally, the inorganic particles include at least one of inorganic particles having a dielectric constant of 5 or more or inorganic particles having ion conductivity but not storing ions.

Optionally, the organic particles include at least one of polycarbonate, polythiophene, polypyridine, polystyrene, polyacrylic wax, polyethylene, polypropylene, cellulose, a cellulose modifier, melamine resin, phenolic resin, polyester, silicone resin, polyimide, polyamide-imide, polyaramid, polyphenylene sulfide, polysulfone, polyethersulfone, polyether ether ketone, polyaryl ether ketone, or a copolymer of butyl acrylate and ethyl methacrylate.

Optionally, the organic-metal framework material includes at least one of a structure constructed with nitrogen-containing heterocyclic ligands, a structure constructed with organic carboxylic acid ligands, or a structure constructed with mixed nitrogen-oxygen ligands.

Unless otherwise specified, all raw materials used in the separator (for example, the first base film, the second base film, the binder, or the filler) are commercially available.

### [Preparation method of separator]

FIG. 2 is a preparation method of a separator according to an embodiment of the present application. As shown in FIG. 2, a method 200 includes the following steps:
Step 210: Provide a first base film and a second base film.
Step 220: Provide a coating slurry.

The coating slurry includes an ion-trapping agent, and a reduction potential of the ion-trapping agent relative to lithium metal is 0 V to 2 V.

Step 230: Apply the coating slurry onto the first base film and/or the second base film.

Step 240: Laminate the first base film and the second base film to obtain a separator.

The separator prepared by the above method, when applied in a secondary battery, is capable of improving cycling performance of the secondary battery.

### [Positive electrode plate]

A positive electrode plate includes a positive electrode current collector and a positive electrode film layer disposed on at least one surface of the positive electrode current collector, where the positive electrode film layer includes a positive electrode active material.

As an example, the positive electrode current collector has two opposing surfaces in a thickness direction thereof, and the positive electrode film layer is disposed on either or both of the two opposing surfaces of the positive electrode current collector.

In some embodiments, the positive electrode current collector may be a metal foil current collector or a composite current collector. For example, an aluminum foil may be used as the metal foil. The composite current collector includes a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the positive electrode active material may employ positive electrode active materials known in the art for lithium-ion batteries. As an example, the positive electrode active material may include at least one of the following materials: a lithium-containing phosphate with an olivine structure, a lithium transition metal oxide, and respective modified compounds thereof. However, the present application is not limited to these materials, and other conventional materials usable as positive electrode active materials for lithium-ion batteries may also be used. These positive electrode active materials may be used alone or in combination of two or more. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (also referred to as NCM333), LiNi_{0.5}Co_{0.2}Mn_{0.3}O₂ (also referred to as NCM523), LiNi_{0.3}Co_{0.23}Mn_{0.23}O₂ (also referred to as NCM211), LiNi_{0.6}Co_{0.2}Mn_{0.2}O₂ (also referred to as NCM622), LiNi_{0.8}Co_{0.1}Mn_{0.1}O₂ (also referred to as NCM811)), lithium nickel cobalt aluminum oxide (for example, LiNi_{0.85}Co_{0.15}Al_{0.05}O₂), and modified compounds thereof. Examples of the lithium-containing phosphate with an olivine structure may include, but are not limited to, at least one of lithium iron phosphate (for example, LiFePO₄ (also referred to as LFP)), a composite of lithium iron phosphate and carbon, lithium manganese phosphate (for example, LiMnPO₄), a composite of lithium manganese phosphate and carbon, lithium manganese iron phosphate, or a composite of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, or a fluorine-containing acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, or carbon nanofibers.

In some embodiments, a positive electrode plate is prepared by the following method: dispersing components for preparing the positive electrode plate, such as a positive electrode active material, a conductive agent, a binder, and any other components, in a solvent (for example, N-methylpyrrolidone) to form a positive electrode slurry; applying the positive electrode slurry onto a positive electrode current collector; and performing processes such as drying and cold pressing to obtain a positive electrode plate.

### [Negative electrode plate]

A negative electrode plate includes a negative electrode current collector and a negative electrode film layer disposed on at least one surface of the negative electrode current collector, where the negative electrode film layer includes a negative electrode active material.

For example, the negative electrode current collector includes two opposing surfaces in a thickness direction thereof, and the negative electrode film layer is disposed on either or both of the two opposing surfaces of the negative electrode current collector.

In some embodiments, the negative electrode current collector may be a metal foil or a composite current collector. For example, a copper foil may be used as the metal foil. The composite current collector includes a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on a polymer material substrate (such as a substrate of polypropylene (PP), polyethylene terephthalate (PET), polybutylene terephthalate (PBT), polystyrene (PS), or polyethylene (PE)).

In some embodiments, the negative electrode active material employs negative electrode active materials known in the art for batteries. As an example, the negative electrode active material may include at least one of the following materials: artificial graphite, natural graphite, soft carbon, hard carbon, a silicon-based material, a tin-based material, or lithium titanate. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin oxide compound, or a tin alloy. However, the present application is not limited to these materials, and other conventional materials usable as negative electrode active materials for batteries may also be used. These negative electrode active materials may be used alone or in combination of two or more.

In some embodiments, the negative electrode film layer further optionally includes a binder. The binder includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), or carboxymethyl chitosan (CMCS).

In some embodiments, the negative electrode film layer further optionally includes a conductive agent. The conductive agent may include at least one of superconducting carbon, acetylene black, carbon black, Ketjen black, carbon dots, carbon nanotubes, graphene, or carbon nanofibers.

In some embodiments, the negative electrode film layer further optionally includes other auxiliaries, such as a thickener (for example, sodium carboxymethyl cellulose (CMC-Na)).

In some embodiments, a negative electrode plate is prepared by the following method: dispersing components for preparing the negative electrode plate, such as a negative electrode active material, a conductive agent, a binder, and any other components, in a solvent (for example, deionized water) to form a negative electrode slurry; applying the negative electrode slurry onto a negative electrode current collector; and performing processes such as drying and cold pressing to obtain a negative electrode plate.

### [Electrolyte]

An electrolyte serves to conduct ions between a positive electrode plate and a negative electrode plate. The type of electrolyte is not specifically limited in the present application and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, or lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methanesulfonate, or diethyl sulfone.

In some embodiments, the liquid electrolyte further optionally includes an additive. For example, the additive may include a negative electrode film-forming additive, a positive electrode film-forming additive, or an additive capable of improving certain battery performance, such as an additive for improving battery overcharge performance or an additive for improving battery high-temperature or low-temperature performance.

In some embodiments, a positive electrode plate, a negative electrode plate, and a separator may be formed into an electrode assembly through a winding process or a stacking process.

In some embodiments, a battery cell may include an outer package. The outer package may be used for packaging the electrode assembly and the liquid electrolyte.

In some embodiments, the outer package of the battery cell may be a hard shell, such as a hard plastic shell, an aluminum shell, or a steel shell. The outer package of the battery cell may also be a soft package, such as a pouch soft package. A material of the soft package may be plastic, examples of which include polypropylene, polybutylene terephthalate, and polybutylene succinate.

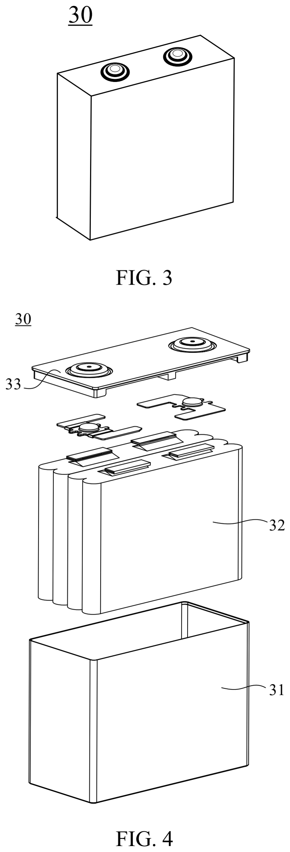

A shape of the battery cell is not specifically limited in the present application, and the battery cell may be cylindrical, rectangular, or of any other shape. For example, FIG. 3 is a battery cell 30 with a rectangular structure as an example.

In some embodiments, referring to FIG. 4, the outer package includes a housing 31 and a cover plate 33. The housing 31 may include a bottom plate and a side plate connected to the bottom plate, where the bottom plate and the side plate enclose an accommodating cavity. The housing 31 has an opening communicating with the accommodating cavity, and the cover plate 33 is capable of covering the opening to seal the accommodating cavity. A positive electrode plate, a negative electrode plate, and a separator are formed into an electrode assembly 32 through a winding process or a stacking process. The electrode assembly 32 is encapsulated in the accommodating cavity. A liquid electrolyte infiltrates into the electrode assembly 32. A number of electrode assemblies 32 included in the battery cell 30 may be one or more, which those skilled in the art may select based on specific practical needs.

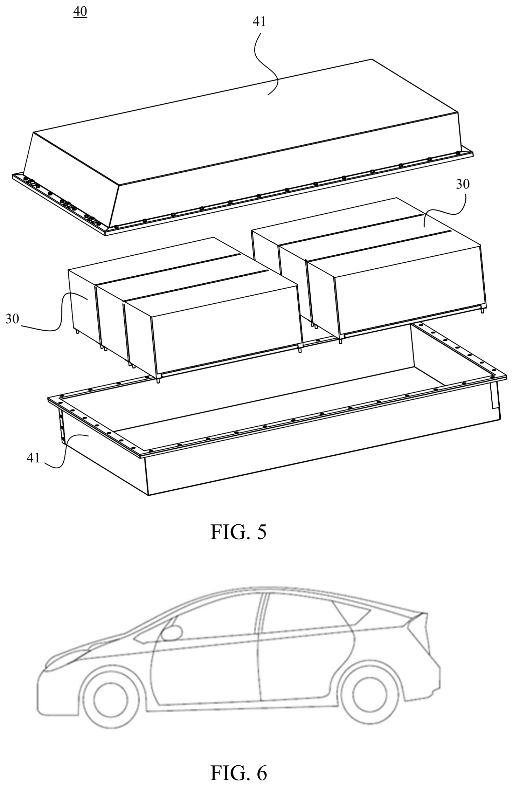

In some embodiments, a battery 40 may include a plurality of battery cells 30. For example, as shown in FIG. 5, a schematic structural diagram of a battery 40 according to an embodiment of the present application is provided, where the battery 40 may include a plurality of battery cells 30. The battery 40 may further include a box 41. An interior of the box 41 is a hollow structure. The plurality of battery cells 30 are accommodated in the box 41. For example, the plurality of battery cells 30 are connected in parallel, in series, or in a combination of series and parallel, and then placed into the box 41.

Optionally, the battery 40 may further include other structures, details of which are not described herein. For example, the battery 40 may further include a busbar component, where the busbar component is used to achieve electrical connection between the plurality of battery cells 30, such as parallel, series, or mixed connections. Specifically, the busbar component achieves electrical connection between the battery cells 30 by connecting electrode terminals of the battery cells 30. Further, the busbar component may be fixed to the electrode terminals of the battery cells 30 by welding. Electrical energy of the plurality of battery cells 30 may be further conducted out through a conductive mechanism passing through the box 41. Optionally, the conductive mechanism may also belong to the busbar component.

Based on different power requirements, a number of battery cells 30 may be set to any value. The plurality of battery cells 30 may be connected in series, in parallel, or in a combination of series and parallel to achieve high capacity or power. Since a number of battery cells 30 included in each battery 40 may be large, for ease of installation, the battery cells 30 may be arranged in groups, with each group of battery cells 30 forming a battery module. A number of battery cells 30 included in a battery module is not limited and may be set according to requirements. A battery may include a plurality of battery modules, and these battery modules may be connected in series, in parallel, or in a combination of series and parallel.

Additionally, the present application further provides an electric apparatus including at least one of a battery cell, a battery module, or a battery provided in the present application. The battery cell, battery module, or battery is used as a power source of the electric apparatus or as an energy storage unit of the electric apparatus. The electric apparatus may include mobile devices (for example, mobile phones or laptops), electric vehicles (for example, pure electric vehicles, hybrid electric vehicles, plug-in hybrid electric vehicles, electric bicycles, electric scooters, electric golf carts, or electric trucks), electric trains, ships, satellites, energy storage systems, and the like, but is not limited thereto.

As the electric apparatus, a battery cell, a battery module, or a battery may be selected based on usage requirements.

FIG. 6 shows an electric apparatus as an example. The electric apparatus is a pure electric vehicle, a hybrid electric vehicle, or a plug-in hybrid electric vehicle, or the like. To meet high power and high energy density requirements of the electric apparatus for battery cells, a battery or a battery module may be used.

In another example, the apparatus may be a mobile phone, a tablet computer, a laptop computer, or the like. The apparatus typically requires thinness and lightness, and a battery cell may be used as a power source.

### [Examples]

The following describes examples of the present application. The embodiments described below are exemplary and used only to explain the present application, and should not be construed as limiting the present application. Specific techniques or conditions are not specified in the embodiments, techniques or conditions described in the literature in the field or product specifications are followed. Reagents or instruments used are all conventional products commercially available if no manufacturer is indicated.

### 1. Preparation of separator

### Separator 1:

A first base film was provided, with a material including polypropylene (PP) and a thickness of 9 µm.

A second base film was provided, with a material including polyethylene (PE) and a thickness of 7 µm.

A coating slurry was provided: an ion-trapping agent Li₇Ti₅O₁₂ and a binder polyvinylidene fluoride (PVDF) were dissolved in a solvent N-methylpyrrolidone (NMP) at a mass ratio of 90%:10%, thoroughly stirred and mixed well to obtain the coating slurry; the coating slurry was then uniformly applied onto the PE base film to form a coating; the PP base film and the PE base film were laminated such that the coating was between the PP base film and the PE base film, followed by drying to prepare separator 1. A mass of the ion-trapping agent per unit area of the prepared separator 1 was 4.8 g/m².

Separator 2: Separator 2 was prepared similarly to separator 1, except that a mass of the ion-trapping agent per unit area of the prepared separator 2 was 0.12 g/m².

Separator 3: Separator 3 was prepared similarly to separator 1, except that a mass of the ion-trapping agent per unit area of the prepared separator 3 was 0.48 g/m².

Separator 4: Separator 4 was prepared similarly to separator 1, except that a mass of the ion-trapping agent per unit area of the prepared separator 4 was 12 g/m².

Separator 5: Separator 5 was prepared similarly to separator 1, except that a mass of the ion-trapping agent per unit area of the prepared separator 5 was 24 g/m².

Separator 6: Separator 6 was prepared similarly to separator 1, except that, in the preparation process of separator 6, a mass ratio of the ion-trapping agent Li₇Ti₅O₁₂ to the binder PVDF in the coating slurry was 50%:50%.

Separator 7: Separator 7 was prepared similarly to separator 1, except that, in the preparation process of separator 7, a mass ratio of the ion-trapping agent Li₇Ti₅O₁₂ to the binder PVDF in the coating slurry was 80%:20%.

Separator 8: Separator 8 was prepared similarly to separator 1, except that, in the preparation process of separator 8, a mass ratio of the ion-trapping agent Li₇Ti₅O₁₂ to the binder PVDF in the coating slurry was 98%:2%.

Separator 9: Separator 9 was prepared similarly to separator 1, except that, in the preparation process of separator 9, a mass ratio of the ion-trapping agent Li₇Ti₅O₁₂ to the binder PVDF in the coating slurry was 99%:1%.

Separator 10: Separator 10 was prepared similarly to separator 1, except that, in the preparation process of separator 10, a mass ratio of the ion-trapping agent Li₇Ti₅O₁₂ to the binder PVDF in the coating slurry was 40%:60%.

Separator 11: Separator 11 was prepared similarly to separator 1, except that the ion-trapping agent in the coating of separator 11 was Na₇Ti₅O₁₂.

Separator 12: Separator 12 was prepared similarly to separator 1, except that the ion-trapping agent in the coating of separator 12 was Li powder.

Separator 13: Separator 13 was prepared similarly to separator 1, except that the ion-trapping agent in the coating of separator 13 was Al powder.

Separator 14: Separator 14 was prepared similarly to separator 1, except that the ion-trapping agent in the coating of separator 14 was Li_{1/6}C.

Separator 15: Separator 15 was prepared similarly to separator 1, except that the ion-trapping agent in the coating of separator 15 was Li_{4.4}Si.

Separator 16: Separator 16 was prepared similarly to separator 1, except that the ion-trapping agent in the coating of separator 16 was n-butyllithium.

Separator 17: Separator 17 was prepared similarly to separator 1, except that the ion-trapping agent in the coating of separator 17 was naphthyllithium.

Separator 18: Separator 18 was prepared similarly to separator 1, except that the ion-trapping agent in the coating of separator 18 was

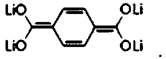

Separator 19: Separator 19 was prepared similarly to separator 1, except that the ion-trapping agent in the coating of separator 19 was

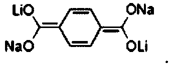

Separator 20: Separator 20 was prepared similarly to separator 1, except that the ion-trapping agent in the coating of separator 20 was

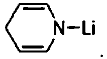

Separator 21: Separator 21 was prepared similarly to separator 1, except that the coating of separator 21 contained inorganic Al₂O₃ ceramic particles, where a mass ratio of the ion-trapping agent Li₇Ti₅O₁₂, inorganic Al₂O₃ ceramic particles, and the binder PVDF was 50%:40%:10%.

Separator 22: Separator 22 was prepared similarly to separator 1, except that the coating of separator 22 contained only the binder PVDF and no ion-trapping agent.

### 2. Preparation of Secondary Battery

### [Example 1]

### (1) Preparation of positive electrode plate

A positive electrode plate was prepared: a positive electrode active material lithium manganate (LiMn₂O₄), a conductive agent acetylene black, and a binder PVDF were dissolved in a solvent N-methylpyrrolidone (NMP) at a mass ratio of 90%:5%:5%, thoroughly stirred and mixed well, applied onto an aluminum foil, dried, and cold-pressed to obtain a positive electrode plate.

### (2) Preparation of negative electrode plate

A negative electrode active material artificial graphite, a conductive agent acetylene black, and a binder PVDF were thoroughly stirred and mixed well in an N-methylpyrrolidone solvent system at a mass ratio of 90%:5%:5%, applied onto a copper foil, dried, and cold-pressed to obtain a negative electrode plate.

### (3) Separator

The separator 1 prepared above was used.

### (4) Preparation of electrolyte

Ethylene carbonate (EC) and ethyl methyl carbonate (EMC) were mixed at a mass ratio of 30%:70%, and 1 M lithium hexafluorophosphate (LiPF₆) electrolytic salt was dissolved to obtain an electrolyte.

### (5) Assembly of secondary battery

The positive electrode plate, separator 1, and negative electrode plate described above were stacked in sequence, with the separator positioned between the positive electrode plate and the negative electrode plate to provide separation, and then wound to obtain an electrode assembly. The electrode assembly was placed in a battery housing, dried, injected with the electrolyte, and subjected to processes such as formation and standing to obtain a lithium-ion secondary battery 1, which was Example 1.

### [Examples 2-21, Comparative Example 1]

Secondary batteries of Examples 2-21 and Comparative Example 1 were prepared similarly to the secondary battery of Example 1, except that different separators were used (where in Examples 1-21 separators 1-21 were used, respectively, and in Comparative Example 1, separator 22 was used), with details provided in Table 1.

### [Examples 22-25]

Secondary batteries of Examples 22-25 were prepared similarly to the secondary battery of Example 1, except that different positive electrode plates were used. Types of positive electrode active materials in the positive electrode plates used in Examples 22-25 were lithium cobalt oxide (LiCoO₂), lithium nickel oxide (LiNiO₂), lithium nickel cobalt manganate (LiNi_{0.8}Co_{0.1}Mn_{0.1}O₂), and lithium iron phosphate (LiFePO₄), respectively, with details provided in Tables 2-5.

### [Comparative Examples 2-5]

Secondary batteries of Comparative Examples 2-5 were prepared similarly to the secondary batteries of the above examples, except that Comparative Examples 2-5 all used separator 22, and types of positive electrode active materials in the positive electrode plates used in Comparative Examples 2-5 were lithium cobalt oxide (LiCoO₂), lithium nickel oxide (LiNiO₂), lithium nickel cobalt manganate (LiNi_{0.8}Co_{0.1}Mn_{0.1}O₂), and lithium iron phosphate (LiFePO₄), respectively, with details provided in Tables 2-5.

Next, a testing process for battery performance is described.

### 3. Battery Performance Testing

### (1) Battery capacity retention rate test

At 45°C, a lithium-ion secondary battery was charged at a constant current of 1C to an upper voltage limit, then charged at a constant voltage of the upper voltage limit until a current was less than 0.05C, and then discharged at a constant current of 1C to a lower voltage limit, constituting one charge-discharge cycle. This charging and discharging were repeated, and a capacity retention rate of the lithium-ion secondary battery after 500 cycles was calculated.

The capacity retention rate (%) of the lithium-ion secondary battery after 500 cycles at 45°C = (discharge capacity at the 500th cycle / discharge capacity at the first cycle) × 100%.

### (2) Transition metal content test on negative electrode after 500 cycles at 45°C

A lithium-ion secondary battery after 500 cycles at 45°C was disassembled, a negative electrode plate was removed, and a total content of transition metals (for example, Ni, Co, Mn, or Fe) on the negative electrode plate was tested using inductively coupled plasma atomic emission spectroscopy in accordance with EPA 6010D-2014.

Voltage upper and lower limit ranges were selected as follows: 3 V to 4.3 V for the lithium manganate system; 2.6 V to 4.2 V for the lithium cobalt oxide system; 2.5 V to 4.2 V for the lithium nickel oxide system; 2.8 V to 4.25 V for the lithium nickel cobalt manganate system; and 2 V to 3.65 V for the lithium iron phosphate system.

Battery performance tests were conducted on Comparative Examples 1-5 and Examples 1-25 prepared according to the above methods, with results detailed in Tables 1-5.

**Table 1: Product parameters and performance test results for Comparative Example 1 and Examples 1-21**

| No. | Separator | Mass of ion-trapping agent per unit area of separator (g/m²) | Mass proportion of ion-trapping agent in coating (%) | Type of ion-trapping agent | Type of positive electrode active material | Battery capacity retention rate after 500 cycles at 45°C (%) | Transition metal content on negative electrode after 500 cycles at 45°C (ppm) |
|---|---|---|---|---|---|---|---|
| Example 1 | Separator 1 | 4.8 | 90 | Li₇Ti₅O₁₂ | Lithium manganate | 92.7 | 822 |
| Example 2 | Separator 2 | 0.12 | 90 | Li₇Ti₅O₁₂ | Lithium manganate | 86.3 | 1710 |
| Example 3 | Separator 3 | 0.48 | 90 | Li₇Ti₅O₁₂ | Lithium manganate | 90.1 | 1089 |
| Example 4 | Separator 4 | 12 | 90 | Li₇Ti₅O₁₂ | Lithium manganate | 92.7 | 813 |
| Example 5 | Separator 5 | 24 | 90 | Li₇Ti₅O₁₂ | Lithium manganate | 92.6 | 815 |
| Example 6 | Separator 6 | 4.8 | 50 | Li₇Ti₅O₁₂ | Lithium manganate | 89.9 | 1189 |
| Example 7 | Separator 7 | 4.8 | 80 | Li₇Ti₅O₁₂ | Lithium manganate | 91.7 | 875 |
| Example 8 | Separator 8 | 4.8 | 98 | Li₇Ti₅O₁₂ | Lithium manganate | 92.6 | 801 |
| Example 9 | Separator 9 | 4.8 | 99 | Li₇Ti₅O₁₂ | Lithium manganate | 92.5 | 792 |
| Example 10 | Separator 10 | 4.8 | 40 | Li₇Ti₅O₁₂ | Lithium manganate | 87.2 | 1482 |
| Example 11 | Separator 11 | 4.8 | 90 | Na₇Ti₅O₁₂ | Lithium manganate | 89.9 | 1063 |
| Example 12 | Separator 12 | 4.8 | 90 | Li powder | Lithium manganate | 94.3 | 195 |
| Example 13 | Separator 13 | 4.8 | 90 | Al powder | Lithium manganate | 87.1 | 1564 |
| Example 14 | Separator 14 | 4.8 | 90 | Li_{1/6}C | Lithium manganate | 93.4 | 723 |
| Example 15 | Separator 15 | 4.8 | 90 | Li_{4.4}Si | Lithium manganate | 93.6 | 669 |
| Example 16 | Separator 16 | 4.8 | 90 | n-Butyllithium | Lithium manganate | 93.2 | 429 |
| Example 17 | Separator 17 | 4.8 | 90 | Naphthyllithium | Lithium manganate | 93.0 | 640 |
| Example 18 | Separator 18 | 4.8 | 90 | 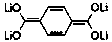 | Lithium manganate | 92.2 | 945 |
| Example 19 | Separator 19 | 4.8 | 90 | 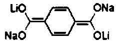 | Lithium manganate | 92.5 | 902 |
| Example 20 | Separator 20 | 4.8 | 90 | 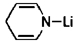 | Lithium manganate | 93.8 | 535 |
| Example 21 | Separator 21 | 4.8 | 50 | Li₇Ti₅O₁₂ | Lithium manganate | 90.4 | 938 |
| Comparative Example 1 | Separator 22 | / | / | / | Lithium manganate | 85.1 | 2325 |

It can be known from the comparison results of Comparative Example 1 with Examples 1-21 that a separator including an ion-trapping agent improves cycling performance of a corresponding lithium manganate battery, and a transition metal content on a negative electrode plate is significantly reduced. Ion-trapping agents Li₇Ti₅O₁₂, Na₇Ti₅O₁₂, metallic Li (powder), metallic Al (powder), Li_{1/6}C, Li_{4.4}Si, n-butyllithium, naphthyllithium, 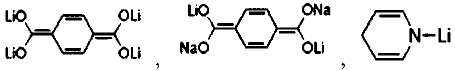 provided in embodiments of the present application, when added to a lithium manganate battery, significantly improve cycling performance of the lithium manganate battery, and a transition metal content on a negative electrode plate is significantly reduced.

It can be known from the comparison results of Examples 1-5 that within a certain range, a higher mass of the ion-trapping agent per unit area of the separator results in greater improvement in cycling performance of a lithium manganate battery. Beyond a certain range, as a mass of the ion-trapping agent per unit area of the separator increases, cycling performance of the lithium manganate battery no longer improves significantly. In embodiments of the present application, under otherwise identical conditions, a mass of the ion-trapping agent per unit area of the separator in a range of 0.48 g/m² to 12 g/m² results in better cycling performance of a lithium manganate battery.

It can be known from the comparison results of Examples 1 and 6-10 that within a certain range, a higher mass proportion of the ion-trapping agent in the coating results in greater improvement in cycling performance of a lithium manganate battery. Beyond a certain range, as a mass proportion of the ion-trapping agent in the coating increases, cycling performance of the lithium manganate battery no longer improves significantly. In the examples of the present application, under otherwise identical conditions, a mass proportion of the ion-trapping agent in the coating in a range of 50% to 99% results in better cycling performance of a lithium manganate battery.

**Table 2: Product parameters and performance test results for Comparative Example 2 and Example 22**

| No. | Separator | Mass of ion-trapping agent per unit area of separator (g/m²) | Mass proportion of ion-trapping agent in coating (%) | Type of ion-trapping agent | Type of positive electrode active material | Battery capacity retention rate after 500 cycles at 45°C (%) | Transition metal content on negative electrode after 500 cycles at 45°C (ppm) |
|---|---|---|---|---|---|---|---|
| Comparative Example 2 | Separator 22 | / | / | / | Lithium cobalt oxide | 83.2 | 1798 |
| Example 22 | Separator 1 | 4.8 | 90 | Li₇Ti₅O₁₂ | Lithium cobalt oxide | 90.6 | 422 |

It can be known from the comparison results of Comparative Example 2 with Example 22 that a lithium cobalt oxide battery including an ion-trapping agent Li₇Ti₅O₁₂ exhibits improved cycling performance, and a transition metal content on a negative electrode plate is significantly reduced.

**Table 3: Product parameters and performance test results for comparative example 3 and example 23**

| No. | Separato r | Mass of ion-trapping agent per unit area of separato r (g/m²) | Mass proportio n of ion-trapping agent in coating (%) | Type of ion-trapping agent | Type of positive electrod e active material | Battery capacit y retentio n rate after 500 cycles at 45°C (%) | Transitio n metal content on negative electrode after 500 cycles at 45°C (ppm) |
|---|---|---|---|---|---|---|---|
| Comparativ e Example 3 | Separato r 22 | / | / | / | Lithium nickel oxide | 87.6 | 1536 |
| Example 23 | Separato r 1 | 4.8 | 90 | Li₇Ti₅O₁ 2 | Lithium nickel oxide | 93.1 | 326 |

It can be known from the comparison results of Comparative Example 3 with Example 23 that a lithium nickel oxide battery including an ion-trapping agent Li₇Ti₅O₁₂ exhibits improved cycling performance, and a transition metal content on a negative electrode plate is significantly reduced.

**Table 4: Product parameters and performance test results for Comparative Example 4 and Example 24**

| No. | Separat or | Mass of ion-trapping agent per unit area of separato r (g/m²) | Mass proportio n of ion-trapping agent in coating (%) | Type of ion-trapping agent | Type of positive electrode active material | Battery capacit y retentio n rate after 500 cycles at 45°C (%) | Transitio n metal content on negative electrode after 500 cycles at 45°C (ppm) |
|---|---|---|---|---|---|---|---|
| Comparati ve Example 4 | Separat or 22 | / | / | / | Lithium nickel cobalt manganat e | 87.2 | 1623 |
| Example 24 | Separat or 1 | 4.8 | 90 | Li₇Ti₅O ₁₂ | Lithium nickel cobalt manganat e | 93.2 | 379 |

It can be known from the comparison results of Comparative Example 4 with Example 24 that a lithium nickel cobalt manganate battery including an ion-trapping agent Li₇Ti₅O₁₂ exhibits improved cycling performance, and a transition metal content on a negative electrode plate is significantly reduced.

**Table 5: Product parameters and performance test results for Comparative Example 5 and Example 25**

| No. | Separato r | Mass of ion-trapping agent per unit area of separato r (g/m²) | Mass proportio n of ion-trapping agent in coating (%) | Type of ion-trappin g agent | Type of positive electrode active material | Battery capacit y retentio n rate after 500 cycles at 45°C (%) | Transitio n metal content on negative electrode after 500 cycles at 45°C (ppm) |
|---|---|---|---|---|---|---|---|
| Comparativ e Example 5 | Separato r 22 | / | / | / | Lithium iron phosphat e | 93.2 | 983 |

It can be known from the comparison results of Comparative Example 5 with Example 25 that a lithium iron phosphate battery including an ion-trapping agent Li₇Ti₅O₁₂ exhibits improved cycling performance, and a transition metal content on a negative electrode plate is significantly reduced.

Although the present application has been described with reference to preferred embodiments, various improvements may be made, and components therein may be replaced with equivalents without departing from the scope of the present application. In particular, as long as no structural conflict exists, various technical features mentioned in the embodiments may be combined in any manner. The present application is not limited to the specific embodiments disclosed herein but includes all technical solutions falling within the scope of the claims.

## Claims

1. A separator comprising:
a first base film, a coating, and a second base film, wherein the coating is disposed between the first base film and the second base film, the coating comprises an ion-trapping agent, and a reduction potential of the ion-trapping agent relative to lithium metal is 0 V to 2 V.

2. The separator according to claim 1, wherein the ion-trapping agent comprises at least one of an active metal or a compound of an alkali metal;
optionally, the active metal comprises at least one of Li, Na, K, Rb, Cs, Fr, Mg, Ca, Sr, Ba, Al, Ti, or V; and optionally, the active metal comprises at least one of Li, Na, Mg, Al, Ti, or V;
optionally, the compound of the alkali metal comprises at least one of A¹ₓB, A²_{y}Ti₅O₁₂, or a compound represented by formula (I), formula (II), or formula (III): 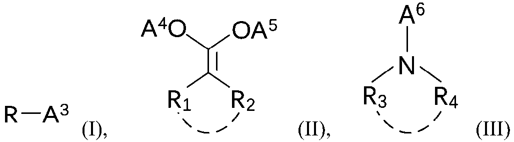
wherein A¹, A², A³, A⁴, A⁵, and A⁶ each independently comprise at least one of Li, Na, or K; B comprises C, Si, or Sn; x ≥ 0.05; y > 4; and R, R₁, R₂, R₃, and R₄ each independently comprise at least one of a hydrogen atom, an alkyl group having 1 to 20 carbon atoms, an alkyl group having 1 to 20 carbon atoms substituted with a sulfonic acid group or a sulfonyl group, an alkenyl group having 2 to 20 carbon atoms, an alkenyl group having 2 to 20 carbon atoms substituted with a sulfonic acid group or a sulfonyl group, an aryl group having 6 to 26 carbon atoms, an aryl group having 6 to 26 carbon atoms substituted with a sulfonic acid group or a sulfonyl group, a carboxyl group having 1 to 20 carbon atoms, a carboxyl group having 1 to 20 carbon atoms substituted with a sulfonic acid group or a sulfonyl group, a carbonyl group having 1 to 20 carbon atoms, a carbonyl group having 1 to 20 carbon atoms substituted with a sulfonic acid group or a sulfonyl group, an aryloxy group having 6 to 26 carbon atoms, or an aryloxy group having 6 to 26 carbon atoms substituted with a sulfonic acid group or a sulfonyl group.

3. The separator according to claim 2, wherein A¹ₓB comprises at least one of Li_{1/6}C, Na_{1/6}C, K_{1/8}C, Li_{4.4}Si, or Li_{4.4}Sn.

4. The separator according to claim 2 or 3, wherein 5 ≤ y ≤ 7; and optionally, A²_{y}Ti₅O₁₂ comprises at least one of Li₇Ti₅O₁₂ or Na₇Ti₅O₁₂.

5. The separator according to any one of claims 2 to 4, wherein the compound represented by formula (I) comprises at least one of n-butyllithium, naphthyllithium, or biphenyllithium.

6. The separator according to any one of claims 2 to 5, wherein the compound represented by formula (II) comprises at least one of

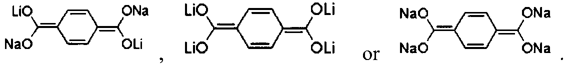

7. The separator according to any one of claims 2 to 6, wherein the compound represented by formula (III) comprises at least one of

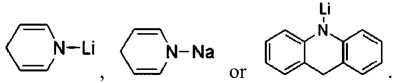

8. The separator according to any one of claims 1 to 7, wherein a mass of the ion-trapping agent per unit area of the separator is 0.12 g/m² to 24 g/m²; and optionally, a mass of the ion-trapping agent per unit area of the separator is 0.48 g/m² to 12 g/m².

9. The separator according to any one of claims 1 to 8, wherein a mass proportion of the ion-trapping agent in the coating is 50% to 99%; and optionally, a mass proportion of the ion-trapping agent in the coating is 80% to 98%.

10. The separator according to any one of claims 1 to 9, wherein
the first base film and the second base film each independently comprise at least one of a polyolefin and derivatives thereof, a halogenated polyolefin and derivatives thereof, a polyether and derivatives thereof, a polyether ether ketone and derivatives thereof, a polyester and derivatives thereof, a polyimide and derivatives thereof, or a polyvinyl alcohol and derivatives thereof;
optionally, the halogenated polyolefin and derivatives thereof comprise at least one of polytetrafluoroethylene and derivatives thereof, polyvinyl fluoride and derivatives thereof, or polyvinylidene fluoride and derivatives thereof; and
optionally, the polyester and derivatives thereof comprise at least one of polyethylene terephthalate and derivatives thereof or polybutylene terephthalate and derivatives thereof.

11. The separator according to any one of claims 1 to 10, wherein the coating further comprises a binder; and
optionally, the binder comprises at least one of polyacrylate, polyacrylic acid, polytetrafluoroethylene, polyvinylidene fluoride, a vinylidene fluoride-trichloroethylene copolymer, polyvinylpyrrolidone, polyvinyl acetate, an ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, or cyanoethyl branched starch.

12. The separator according to any one of claims 1 to 11, wherein the coating further comprises a filler;
optionally, the filler comprises at least one of inorganic particles, organic particles, or an organic-metal framework material;
optionally, the inorganic particles comprise at least one of inorganic particles having a dielectric constant of 5 or more or inorganic particles having ion conductivity but not storing ions;
optionally, the organic particles comprise at least one of polycarbonate, polythiophene, polypyridine, polystyrene, polyacrylic wax, polyethylene, polypropylene, cellulose, a cellulose modifier, melamine resin, phenolic resin, polyester, silicone resin, polyimide, polyamide-imide, polyaramid, polyphenylene sulfide, polysulfone, polyethersulfone, polyether ether ketone, polyaryl ether ketone, or a copolymer of butyl acrylate and ethyl methacrylate; and
optionally, the organic-metal framework material comprises at least one of a structure constructed with nitrogen-containing heterocyclic ligands, a structure constructed with organic carboxylic acid ligands, or a structure constructed with mixed nitrogen-oxygen ligands.

13. A preparation method of a separator, comprising:
providing a first base film and a second base film;
providing a coating slurry, wherein the coating slurry comprises an ion-trapping agent, and a reduction potential of the ion-trapping agent relative to lithium metal is 0 V to 2 V;
applying the coating slurry onto the first base film and/or the second base film; and
stacking the first base film and the second base film to obtain a separator.

14. A secondary battery comprising the separator according to any one of claims 1 to 12.

15. An electric apparatus comprising the secondary battery according to claim 14.
